(19) Europäisches Patentamt
European Patent Office
Office européen des brevets

(11) Publication number: 0 388 804 A2

(12) # EUROPEAN PATENT APPLICATION

(21) Application number: 90104965.0

(22) Date of filing: 16.03.90

(51) Int. Cl.5: C09D 163/00, C09D 5/46

(30) Priority: 22.03.89 US 326932

(43) Date of publication of application:
26.09.90 Bulletin 90/39

(84) Designated Contracting States:
AT BE CH DE DK ES FR GB IT LI NL SE

(71) Applicant: THE DOW CHEMICAL COMPANY
2030 Dow Center Abbott Road P.O. Box 1967
Midland Michigan 48640-1967(US)

(72) Inventor: McKinney, Osborne K.
56 White Oak Court
Lake Jackson, Texas 77566(US)
Inventor: Moore, Randy S.
226 Palm Lane
Lake Jackson, Texas 77566(US)
Inventor: Wernli, James E.
103 Oyster Bend Lane
Lake Jackson, Texas 77566(US)

(74) Representative: Sternagel, Hans-Günther, Dr. et al
Patentanwälte Dr. Michael Hann Dr. H.-G. Sternagel Sander Aue 30
D-5060 Bergisch Gladbach 2(DE)

(54) **Flame sprayable epoxy coating compositions.**

(57) Flame sprayable coating compositions are prepared from (A) a melt blended, pre-reacted component comprising (1) from 75 to 98 percent by weight of at least one solid epoxy resin having a degree of polymerization of from 0 to 7; and (2) from 5 to 15 percent by weight of at least one olefinic polymer containing from 0.1 to 55 percent by weight of a group reactive with vicinal epoxy groups; (B) a melt blended, pre-reacted component comprising (3) from 10 to 60 percent by weight of at least one solid epoxy resin having a degree of polymerization of from 1 to 6; and (4) from 40 to 90 percent by weight of at least one olefinic polymer containing from 0.1 to 55 percent by weight of a group reactive with vicinal epoxy groups; and (C) a melt blended, non-reacted composition comprising(5) from 40 to 90 percent by weight of at least one solid epoxy resin having a degree of polymerization of from 1 to 10; and (6) from 10 to 50 percent by weight of at least one inorganic filler.

EP 0 388 804 A2

## FLAME SPRAYABLE EPOXY COATING COMPOSITIONS

The present invention concerns flame sprayable epoxy resin coating compositions and articles coated therewith.

Epoxy resins generally provide basis for powder coatings having excellent properties. These powder coatings are usually applied by electrostatic spraying or by means of fluidized beds wherein a heated article is suspended in a fluidized bed of the powder coating. In some instances where preheating and/or postheating is impractical, such as in field maintenance, repair and new installation activities, it would be desirable to apply epoxy-based powder coatings by a flame spray technique wherein a powder coating formulation is passed through a flame whereupon the coating is melted and forced upon an article being coated. However, conventional powder coating compositions applied by flame spray techniques exhibit poor coating properties such as brittleness and low impact strength due to insufficient or inadequate curing or crosslinking.

It would therefore be desirable to have available an epoxy-based powder coating formulation which provides a coating having resiliency and good impact strength when applied by the flame spray method.

One aspect of the present invention pertains to an epoxy resin based powder coating composition comprising

(A) a melt blended, pre-reacted component comprising

(1) from 75 to 98 percent by weight of at least one solid epoxy resin having a degree of polymerization of from zero to 7; and

(2) from 2 to 25 percent by weight of at least one olefinic polymer containing from 0.1 to 55 percent by weight of at least one group reactive with vicinal epoxy groups;

(B) a melt blended, pre-reacted component comprising

(3) from 10 to 60 percent by weight of at least one solid epoxy resin having a degree of polymerization of from 1 to 6; and

(4) from 40 to 90 percent by weight of at least one olefinic polymer containing from 0.1 to 55 percent by weight of at least one group reactive with vicinal epoxy groups; and

(C) a melt blended, non-reacted composition comprising

(5) from 40 to 90 percent by weight of at least one solid epoxy resin having a degree of polymerization of from 1 to 10;

(6) from 10 to 50 percent by weight of at least one inorganic filler; and wherein

(a) component (A) is present in an amount of from 20 to 45 percent by weight based upon the combined weight of components (A), (B) and (C);

(b) component (B) is present in an amount of from 12 to 36 percent by weight based upon the combined weight of components (A), (B) and (C):

(c) component (C) is present in an amount of from 19 to 68 percent by weight based upon the combined weight of components (A), (B) and (C);

(d) components (A), (B) and (C) are separately size reduced and classified into a fine powder by any suitable means; and

(e) the resultant powder composition of (A), (B) and (C) is dry blended by any suitable means.

The term "degree of polymerization" means the number of times a group or moiety within a polymer chain is repeated.

For epoxy resins "degree of polymerization" is the common reference for average molecular weight, epoxide equivalent weight and melt viscosity, where a higher degree of polymerization is indicative of a higher average molecular weight. For olefinic polymers, common average molecule weight references include melt index and melt viscosity where a lower melt index and/or a higher melt viscosity is indicative of a higher molecular weight for the total polymer.

Another aspect of the present invention pertains to articles flame spray coated with the above coating composition.

The present invention provides a composition which results in a powder coating which can be applied by the flame spray technique resulting in a coating with desirable properties such as good impact strength, smooth appearance, adhesion, scratch resistance, flow out, pigmentability and low temperature/ambient fusion, for example, at temperatures from -40 °C to 140 °C. By "good impact strength" it is meant that drop impact testing will show greater than 5 inch-pounds/mil on 1/8 inch carbon steel substrates.

In addition, unlike conventional epoxy resin based powder coating compositions, the compositions of the present invention "fuses" to provide a continuous, non-porous coating, much like other thermoplastic coatings. Also, the composition of the present invention do not "cure" or "crosslink" per se.

The thermoplastic characteristic of the compositions of the present invention permits coating compositions of the present invention to be easily repaired in the event of damage. Suitable repair can often be accomplished by 1) simply reheating the coating at the damaged point to allow existing coating material to flow onto the damaged area and subsequently fuse together and/or 2) by flame spraying additional coating material onto the damage area. This characteristic is an improvement over conventional epoxy coatings compositions which are recognized as being very difficult to repair after being cured, i.e., epoxies do not adhere to cured epoxy coatings and cured epoxies do not re-flow.

The compositions of the present invention also have a time-savings and labor-savings advantage. Conventional epoxy coating systems are typically applied in 2 to 4 coats and the required "curing" of each coat invariably dictates long time intervals (2 to 24 hours) between each coat. Conversely, the compositions of the present invention have no such limitation since they are 1) employed as a single coat without primer coats and/or top coats, and 2) fuse and cool to ambient temperatures in 0.5 to 2 hours.

Any method which accomplishes the reaction between the epoxy groups of the epoxy resin and the groups reactive with an epoxy group of the olefinic polymer containing such groups is suitable for the purposes of the present invention for the preparation of components (A) and (B).

In a particularly preferred method, the solid epoxy resin and the olefinic polymer containing groups reactive with epoxy groups are conveniently reacted together by melt blending in an extruder or other convenient means at temperature of from 60° C to 150° C, preferably from 80° C to 110° C, more preferably from 90° C to 100° C for a time sufficient to complete the reaction and provide adequate mixing of the two components. This time is generally less than 5 minutes.

Component (A) of the present invention contains from 75 to 98, preferably from 79 to 95, more preferably from 84 to 90 percent by weight of at least one solid epoxy resin having a degree of polymerization of from 0 to 7, preferably from 1 to 5; and from 2 to 25, preferably from 5 to 20, more preferably from 10 to 16 percent by weight of at least one olefinic polymer containing a group reactive with vicinal epoxy groups.

Component (B) of the present invention contains from 10 to 60, preferably from 20 to 50, more preferably from 30 to 40 percent by weight of at least one solid epoxy resin having a degree of polymerization of from 1 to 6 preferably from 2 to 5; and from 40 to 90, preferably from 50 to 80, more preferably from 60 to 70 percent by weight of at least one olefinic polymer containing at least one group reactive with vicinal epoxy groups.

Component (C) of the present invention contains from 40 to 90, preferably from 50 to 80, more preferably from 60 to 70 percent by weight of at least one solid epoxy resin having a degree of polymerization of from 1 to 10, preferably from 2 to 5; and from 10 to 50, preferably from 20 to 40, more preferably from 25 to 35 percent by weight of at least one inorganic filler.

Component (A) is usually employed in amounts of from 20 to 45, preferably from 25 to 40, more preferably from 27 to 38 percent by weight based upon the combined weight of components (A), (B) and (C).

Component (B) is usually employed in amounts of from 12 to 36, preferably from 15 to 33, more preferably from 18 to 28 percent by weight based upon the combined weight of components (A), (B) and (C).

Component (C) is usually employed in amounts of from 19 to 68, preferably from 27 to 60, more preferably from 32 to 55 percent by weight based upon the combined weight of components (A), (B) and (C).

Solid epoxy resins which can be employed in the present invention include any solid epoxy resin represented by the following general formula I:

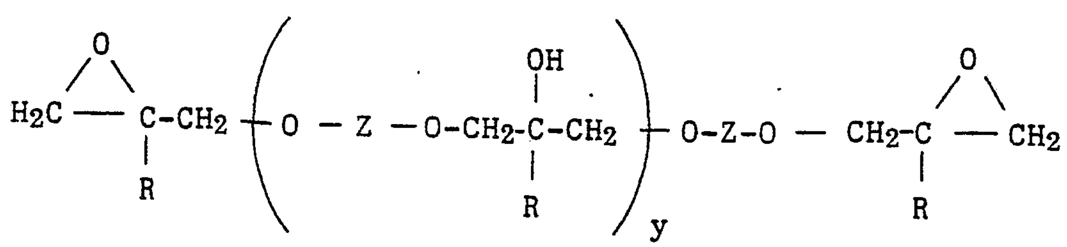

wherein each R is independently hydrogen or an alkyl group having from 1 to 3 carbon atoms; each Z is independently a divalent moiety containing at least one aromatic ring constituent; and y has a value suitably from 0 to 10, more suitably from 1 to 7, most suitably from 1 to 5.

In the above formulation, the value of y is the degree of polymerization for the epoxy resins encompassed by the above formula I.

Particularly suitable moieties which are represented by Z in the above formula I include, for example, phenyl or hydrocarbyl or hydrocarbyloxy or halogen substituted phenyl moieties; hydrocarbyl or hydrocarbyloxy or halogen substituted phenyl moieties; biphenyl moieties; hydrocarbyl or hydrocarbyloxy or halogen substituted biphenyl moieties; hydrocarbyl or hydrocarbyloxy or halogen substituted biphenyl moieties wherein the phenyl groups are separated or bridged by a divalent alkyl having suitably from 1 to 12, more suitably from 1 to 6, more suitably from 1 to 4 carbon atoms, -S-, -S-S-, -SO- $-SO_2-$, -O-, or -CO- group; and moieties having more than two aromatic rings or hydrocarbyl or hydrocarbyloxy or halogen substituted aromatic rings wherein the rings are separated or bridged by a divalent alkyl, -S-, -S-S-, -SO- $-SO_2-$, -O-, or -CO- group.

The term "hydrocarbyl group" as employed herein means any aliphatic, cycloaliphatic, aromatic, aryl substituted aliphatic or cycloaliphatic, or aliphatic or cycloaliphatic substituted aromatic group. The aliphatic groups can be saturated or unsaturated. Likewise, the term "hydrocarbyloxy group" means a hydrocarbyl group having an oxygen linkage between the hydrocarbyl group and the object to which it is attached.

More particularly suitable such divalent moieties include, for example, those represented by the following general formulas II-VI:

Formula II

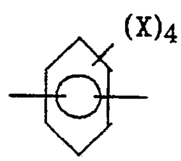

;

Formula III

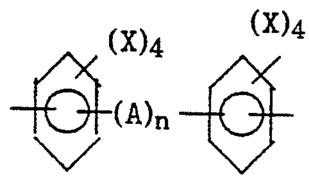

;

Formula IV

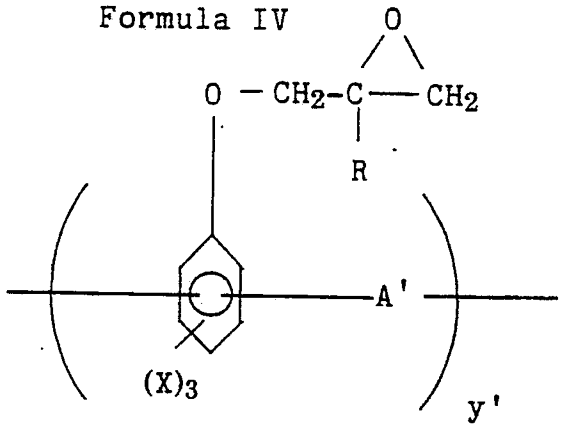

;

Formula V

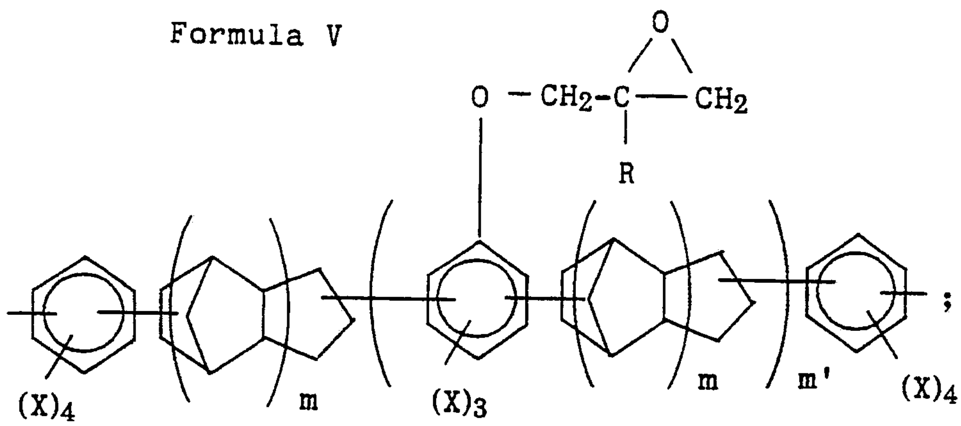

; and

Formula VI

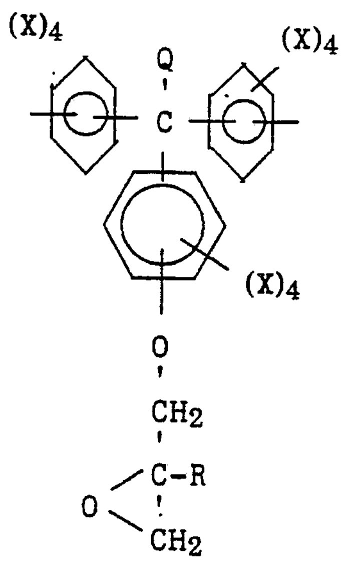

wherein each A is independently a divalent hydrocarbyl group having suitably from 1 to 12, more suitably from 1 to 6, most suitably from 1 to 4 carbon atoms, -S-, -S-S-, -O-, -SO- $-SO_2-$, or -CO-; each A′ is

independently a divalent hydrocarbyl group having from 1 to 10, more suitably from 1 to 4, most suitably from 1 to 2 carbon atoms; each Q is independently hydrogen or an alkyl group having from 1 to 4 carbon atoms; each R is independently hydrogen or an alkyl group having from 1 to 3 carbon atoms; each X is independently hydrogen, a hydrocarbyl or hydrocarbyloxy group having suitably from 1 to 12, more suitably from 1 to 6, most suitably from 1 to 4 carbon atoms or a halogen atom, preferably chlorine or bromine; each m suitably has a value from zero to 10, more suitably from 1 to 7, most suitably from 1 to 5; and each $m'$ suitably has an average value from zero to 8, more suitably from 1 to 6, most suitably from 1 to 4; n has a value of zero or 1; and $y'$ has an average value suitably from 0.01 to 8, more suitably from 1 to 6, most suitably from 2 to 4.

Most particularly suitable such divalent moieties include, for example, those represented by Formulas III, IV or V wherein each R is hydrogen; each A is a methylene, isopropylidene or carbonyl group; each $A'$ is a methylene group; each m has an average value of from 2 to 5; $m'$ has an average value from 2 to 4; and $y'$ has an average value of from 1 to 4.

The solid epoxy resins employed herein usually have a Kinematic melt viscosity of from 325 to 150,000 centistokes (0.000325 to 0.15 $m^2/s$) at 150°C and a Mettler softening point of from 60°C to 175°C. When the solid epoxy resins are bisphenol A based, the resins conveniently have epoxide equivalent weights (EEW) of from 475 to 3200.

These solid epoxy resins can be conveniently prepared by reacting a diglycidyl ether of the appropriate phenolic hydroxyl containing compound with the appropriate phenolic hydroxyl containing compound in the presence of a suitable catalyst such as a phosphonium compound. This and other methods for preparing solid epoxy resins can be found in Handbook of Epoxy Resins by Lee and Neville, McGraw-Hill (1967).

Olefinic polymers containing groups reactive with epoxy groups which can be employed in the present invention are prepared by any suitable means which incorporates, by either interpolymerization, chemical or extrusion grafting onto the polymer, a chemical group which is reactive with an epoxide group. Suitable such chemical groups which are reactive with epoxide groups include, for example, carboxylic acid groups, anhydride groups and hydroxyl groups.

The olefinic polymers can be prepared by polymerizing one or more $\alpha$-olefins with one or more ethylenically unsaturated monomers which contains a group reactive with an epoxide group. Particularly suitable $\alpha$-olefins which can be employed herein include, for example, ethylene, propylene, butene-1, pentene-1, hexene-1, heptene-1, octene-1, nonene-1, decane-1, undecene-1, dodecene-1 and any combination thereof. Particularly suitable ethylenically unsaturated monomers which contain a group reactive with an epoxide group which can be employed herein include, for example, acrylic acid, methacrylic acid, maleic anhydride, allyl alcohol, hydroxyethyl acrylate, hydroxyethyl methacrylate, hydroxypropyl acrylate, hydroxypropyl methacrylate and combinations thereof. If desired, the olefinic polymer can also employ at least one other monomer in preparing the polymer, for example, alkyl and aryl esters of ethylenically unsaturated carboxylic acids, for example, methyl acrylate, methyl methacrylate, ethyl acrylate, ethyl methacrylate, propyl acrylate, propyl methacrylate, butyl acrylate, butyl methacrylate, hexyl acrylate, hexyl methacrylate, 2-ethylhexyl acrylate, 2-ethylhexyl methacrylate, vinyl acetate, vinyl toluene, styrene, vinyl acetate and combinations thereof. Also suitably used herein are olefinic polymers characterized in that the carboxylic acid groups have been ionomerized by reaction with an alkali or alkaline earth metal salts such as, zinc oxide, zinc hydroxide, calcium chloride, calcium hydroxide, magnesium oxide, cesium oxide, zinc chloride or any combination thereof. Also suitably used herein are olefinic polymers characterized in that the ester groups have been saponified with an alkali or alkaline earth metal hydroxide such as sodium hydroxide, potassium hydroxide, lithium hydroxide, barium hydroxide, calcium hydroxide, magnesium hydroxide and any combination thereof. An important criteria of the polymer is that it contain from 0.1 to 55, preferably from 2 to 45, more preferably from 5 to 35 percent by weight of groups reactive with an epoxide group and that it have a melt index in the range of from 20 to 2600 grams/10 minutes, preferably.

Interpolymers or copolymers can be prepared by polymerizing the desired monomers in the presence of one or more well known free radical generating catalysts such as peroxides, azo compounds and Ziegler-Natta catalysts. Particularly suitable such catalysts include, for example, t-butyl peroctoate, ditert-butyl peroxide, triethylaluminum-titaniumtrichloride, 2,2'-azobis(2-methyl butyronitrile) and combinations thereof.

The melt blended, reacted blends can be comminuted or particulated by any suitable means such as, cryogenic grinding at temperatures below zero degrees centigrade, in an impact, hammer, rotor, roll, ball or attrition type or air classifying type mill.

After comminuting the melt blended components, the particulated components can be sized by passing them through various screens of the appropriate size.

Each of the components of the present invention preferably have an average particle size of less than 225 microns, preferably from 50 to 175 microns, most preferably from 75 to 150 microns.

Particularly suitable inorganic fillers which can be employed herein include, for example, titanium dioxide, zinc oxide, calcium carbonate, silicon dioxide, microtalc, alumina, flint powder, mica, glass, bentonite clay, calcium silicate, molybdenum disulfide and any combination thereof.

The powder coating compositions of the present invention can contain, if desired, flow control or modifier agents, stabilizers, antioxidants, leveling agents, hardeners or curing agents or catalysts and/or pigments or colorants.

The flame sprayable, powder coating compositions of the present invention can contain from 0.1 to 5, preferably from 0.5 to 4, more preferably from 0.75 to 2.5 percent by weight of a flow control or modifier agent. Particularly suitable flow control or modifier agents employed herein include, for example, amidified silica flow aid and polymeric acrylate flow modifiers.

The flame sprayable, powder coating compositions of the present invention can contain from 0.05 to 4, preferably from 0.1 to 3, more preferably from 0.5 to 2.5 percent by weight of a non-accelerated amide, amine or phenolic hardener or curing agent or catalyst. Particularly, suitable such non-accelerated amide, amine, anhydride or phenolic hardeners or curing agents or catalysts which can be employed herein include, for example, diethylenetriamine, triethylenetetramine, aminoethyl piperazine, phthalic anhydride, Nadic Methyl Anhydride™ (methylbicyclo(2.2.1)heptene-2,3-dicarboxylic anhydride isomers), (a trademark of Allied Chemical Corporation,) metaphenylene diamine, dicyandiamide, phenol-formaldehyde novolac resins and any combination thereof.

The flame sprayable, powder coatings of the present invention are suitable for coating any type of substrate such as plastic, metal, wood and concrete particularly, the interior and exterior of pipe, storage vessels and tanks, and other transportation, industrial and marine substrates.

The following examples are illustrative of the invention.

## Example 1

### Preparation of Component A

A pre-reacted blend comprising (a) 40.0 percent by weight of a Bisphenol A based solid epoxy resin having an epoxide equivalent weight (EEW) of about 900 and a Mettler softening point of about 101° C, (b) 40.0 percent by weight of a low molecular weight phenol-formaldehyde novolac-modified Bisphenol A based solid epoxy resin having about a 525 EEW and a Mettler softening point of about 94° C, and (c) 6.0 percent by weight of a Bisphenol A based solid epoxy resin having an EEW of about 525 and a Mettler softening point of about 80° C; and (d) 12 percent by weight of an ethylene-acrylic acid copolymer containing about 20 percent by weight acrylic acid and having a melt flow rate of about 65 g/10 minutes at 125° C by ASTM D-1238, condition D (1985) was prepared in 1-quart Banbury mixer at a plastic temperature of about 104° C. The resultant blend was first cooled to ambient temperature, then cryogenically ground at -55° C on a Mikro-Pul hammer mill and then classified through a U.S. Standard 80 Mesh Sieve (175 microns) on a Roto-Tap lab unit.

### Preparation of Component B

A pre-reacted blend component comprising (a) 35 percent by weight of a Bisphenol A based solid epoxy resin having an epoxide equivalent weight (EEW) of about 900 and a Mettler softening point of about 101° C; and (b) 65 percent by weight of an ethylene-acrylic acid copolymer containing 20 percent by weight acrylic acid and having a melt flow rate of about 65 g/10 minutes at 125° C by ASTM D-1238, condition D (1985) was prepared in a 1-quart Banbury mixer at a plastic temperature of about 89° C. The resultant blend was first cooled to ambient temperature, then cryogenically ground at -128° C and then classified through a U.S. Standard 80 Mesh sieve (175 microns) on a Roto-Tap lab unit.

### Preparation of Component C

A melt mixed blend comprising (a) 65 percent by weight of a Bisphenol A based solid epoxy resin having a 525 EEW and a Mettler softening point of about 80° C, (b) 30 percent by weight of titanium dioxide filler, 2.0 percent by weight of solid non-accelerated dicyandiamide catalyst, (c) 0.8 percent by weight of a

polymeric acrylate flow aid (ACRYLONTM MFP - trademark of Syntron) and (d) 0.8 percent by weight benzoin as a leavening aid, was prepared in a Banbury mixer at a plastic temperature of about 96° C. The resultant product was first cooled to ambient temperature, then cryogenically ground at -37° C and then classified through a U.S. Standard 80 Mesh sieve (175 microns) on a Roto-Tap lab unit.

Preparation of Composition of the Present Invention

A final composition was prepared by dry-blending 31.6 percent by weight of component (A), 22.5 percent by weight of component (B) and 38.6 percent by weight of component (C) with 2.0 percent by weight of an amidified silica flow aid (Sylob1ocTM 150 - trademark of W. R. Grace), 0.22 percent by weight non-accelerated dicyandiamide catalyst, 0.8 percent by weight of a polymeric acrylate flow aid and 0.8 percent by weight benzoin as a leavening agent. The dry mixture was additionally classified through a U.S. Standard 80 Mesh sieve (175 microns) on a Roto-Tap lab unit to insure complete fineness.

This finely powdered thermoplastic epoxy composition was flame-sprayed onto a 2 feet x 2 feet x 1/8 inch (50.8 mm x 50.8 mm x 3.175 mm) prepared cold-rolled steel plate using an Uni-Spray JetTM plastic flame-spray gun (supplied by UTP Welding Materials) set to 5 psig acetylene, 30 psi oxygen and 75 psi air. The application rate of the fine powder was about 5.25 square feet per minute (0.49 square meters/minute). The resultant coating was allowed to cool free-standing to ambient temperature which requires less than 15 minutes and the final fused coating measured 3.5 mils and had a smooth, attractive appearance.

The resultant coating showed no adhesion loss in cross-hatched testing and in conical-mandrel bending up to 1 inch (0.254 meter). Pencil hardness measured 2H, forward impact strength measured 100 inch-pounds and reverse impact strength measured 50 inch-pounds without metal exposure. Also, excessive impacts could be quickly repaired by flame-polishing without additional powder deposition.

Comparative Experiment A

For comparative purposes, Component (C) was flame-sprayed through the Uni-Spray JetTM equipment at the same settings as described in Example 4. The resultant coating was very smooth but very brittle with no measurable impact strength and adhesion. Attempts to repair cracks in the coating by flame-polishing and/or by additional powder depositions were unsuccessful.

## Claims

1. An epoxy resin based flame sprayable powder coating composition comprising

(A) a melt blended, pre-reacted component comprising

(1) from 75 to 98 percent by weight of at least one solid epoxy resin having a degree of polymerization of from 0 to 7; and

(2) from 2 to 25 percent by weight of at least one olefinic polymer containing from 0.1 to 55 percent by weight of at least one group reactive with vicinal epoxy groups;

(B) a melt blended, pre-reacted component comprising

(3) from 10 to 60 percent by weight of at least one solid epoxy resin having a degree of polymerization of from 1 to 6; and

(4) from 40 to 90 percent by weight of at least one olefinic polymer containing from 0.1 to 55 percent by weight of at least one group reactive with vicinal epoxy groups; and

(C) a melt blended, non-reacted composition comprising

(5) from 40 to 90 percent by weight of at least one solid epoxy resin having a degree of polymerization of from 1 to 10;

(6) from 10 to 60 percent by weight of at least one inorganic filler; and

wherein

(a) component (A) is present in an amount of from 20 to 45 percent by weight based upon the combined weight of components (A), (B) and (C);

(b) component (B) is present in an amount of from 12 to 36 percent by weight based upon the combined weight of components (A), (B) and (C); and

(c) component (C) is present in an amount of from 19 to 68 percent by weight based upon the combined weight of components (A), (B) and (C).

2. A flame sprayable composition of Claim 1 wherein

(a) components (A-1), (B-3) and (C-5) are independently selected from solid epoxy resins represented by the following general formula I:

Formula I

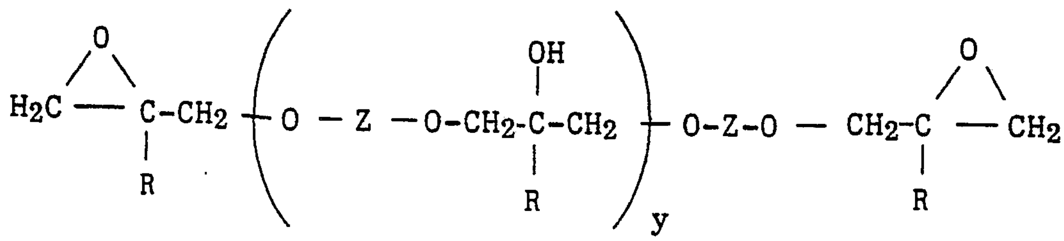

wherein each R is independently hydrogen or an alkyl group having from 1 to 3 carbon atoms; each Z is independently a divalent moiety containing at least one aromatic ring constituent; and y has a value from 0 to 10; and

(b) components (A-2) and (B-4) are independently selected from olef inic polymers prepared by interpolymerizing one or more α-olefins and one or more ethylenically unsaturated carboxylic acids, which polymer contains from 0.1 to 55 percent carboxyl groups by weight.

3. A flame sprayable composition of Claim 2 wherein

(a) components (A-1), (B-3) and (C-5) are independently selected from solid epoxy resins represented by formula 1 wherein each R is hydrogen; y has a value from 1 to 7; and each Z is independently selected from the moieties represented by the following formulas II-VI:

Formula II

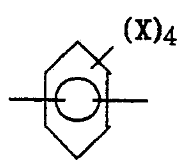

;

Formula III

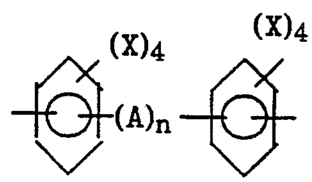

;

Formula IV

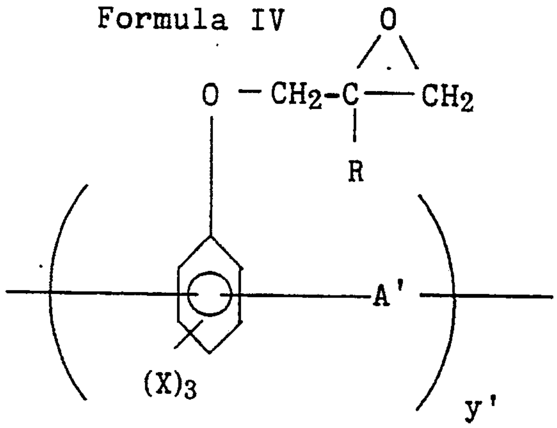

;

Formula V

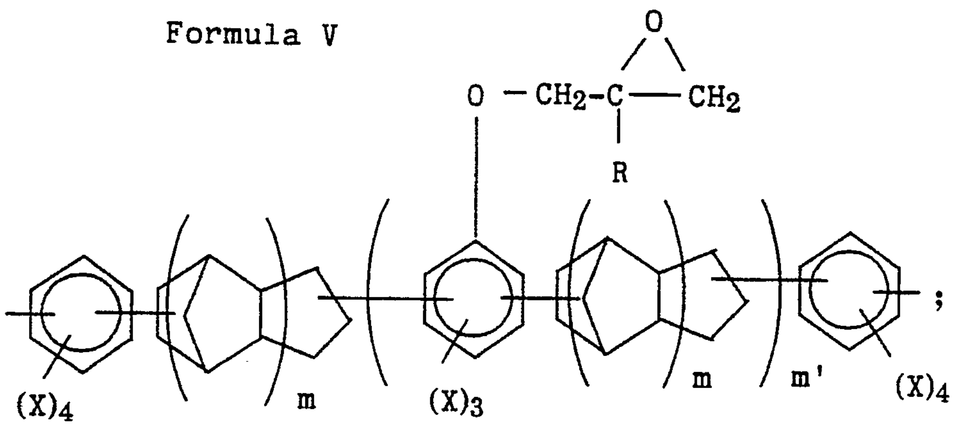

; and

Formula VI

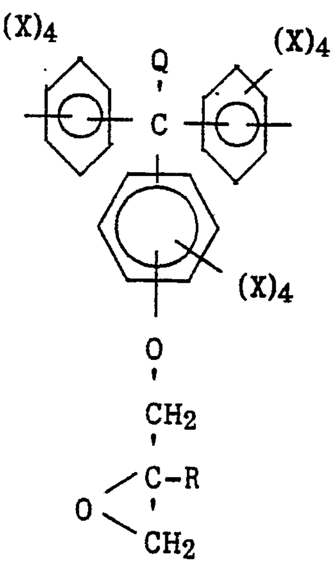

wherein each A is independently a divalent hydrocarbyl group having suitably from 1 to 12 carbon atoms, -S-, -S-S-, -O-, -SO- $-SO_2-$, or -CO-; each A′ is independently a divalent hydrocarbyl group having from 1 to 10 carbon atoms; each Q is independently hydrogen or an alkyl group having from 1 to 4 carbon atoms; each R is independently hydrogen or an alkyl group having from 1 to 3 carbon atoms; each X is independently hydrogen, a hydrocarbyl or hydrocarbyloxy group having from 1 to 12 carbon atoms or a halogen atom; each m has a value from zero to 10; and each m′ has an average value from zero to 8; n has a value of zero or 1; and y′ has an average value from 1 to 6; and

(b) components (A-2) and (B-4) are independently selected from olefinic polymers prepared by interpolymerizing one or more α-olefins having up to carbon atoms and one or more ethylenically unsaturated carboxylic acids, which polymer contains from 2 to 45 percent carboxyl groups by weight.

4. A flame sprayable composition of Claim 3 wherein

(a) components (A-1), (B-3) and (C-5) are independently selected from solid epoxy resins represented by formula I wherein each R is hydrogen; y has a value from 1 to 5; and each Z is independently selected from the moieties represented by formulas III-IV wherein each A is independently a divalent hydrocarbyl group having from 1 to 4 carbon atoms; each A′ is a methylene group; each X is independently hydrogen, a methyl group or a bromine atom; each m has a value from 1 to 5; and each m′ has an average value from 1 to 4; n has a value of 1; and y′ has an average value from 2 to 4; and

(b) components (A-2), (B-4) are independently selected from olefinic polymers prepared by interpolymerizing ethylene and one or more α-olefins having up to 6 carbon atoms and acrylic acid or methacrylic acid or a combination of acrylic and methacrylic acids, which polymer contains from 5 to 35 percent carboxyl groups by weight.

5. A flame sprayable composition of Claim 4 wherein

(a) components (A-1), (B-3) and (C-5) are selected from (i) bisphenol-A based solid epoxy resins, (ii) phenol-formaldehyde modified bisphenol A based solid epoxy resins or (iii) a combination of (i) and (ii);

(b) components (A-2) and (B-4) are copolymers of ethylene and acrylic acid; and

(c) component (C-6) is titanium dioxide.

6. A flame sprayable composition of Claim 1 or 2 wherein

(a) components (A), (B) and (C) are separately size reduced and classified into a fine powder by any suitable means; and

(b) the resultant powder composition of (A), (B) and (C) is dry blended by any suitable means.

7. An article coated with a flame sprayable composition of Claim 1 or 2.